# EUROPÄISCHE PATENTSCHRIFT

(11) **EP 0 645 213 B1**
(45) Veröffentlichungstag und Bekanntmachung des Hinweises auf die Patenterteilung: **26.02.1997**
(21) Anmeldenummer: 94114379.4
(22) Anmeldetag: 13.09.1994
(51) Int. Cl.: B23Q 7/14

(54) **Vorrichtung zur lagefixierten Positionierung einer Palette auf einem Augspanntisch**
Device for the firm positioning of a pallet on a clamping table
Dispositif pour le positionnement d'une palette à localisation prédéterminée sur une table de serrage

(30) Priorität: 24.09.1993 DE 9314483 U
(43) Veröffentlichungstag der Anmeldung: 29.03.1995
(73) Patentinhaber: DECKEL MAHO GmbH, D-87459 Pfronten (DE)
(72) Erfinder: Morshäuser, Georg, D-87484 Nesselwang (DE); Geissler, Alfred, D-87459 Pfronten (DE)
(74) Vertreter: Beetz & Partner Patentanwälte

(56) Entgegenhaltungen:
- EP-A- 0 111 368
- EP-A- 0 230 764
- EP-A- 0 521 316
- DE-A- 4 118 840
- DE-U- 8 617 929
- FR-A- 2 443 311
- GB-A- 2 024 672
- US-A- 5 167 405

## Beschreibung

Die Erfindung betrifft eine Vorrichtung zur lagefixierten Positionierung einer Palette auf einem Aufspanntisch, bestehend aus einem vertikal bewegbaren Palettenträger für den Transport und zum Abheben bzw. Auflegen einer mit unterseitigen Spannelementen versehenen Palette und aus mindestens einer im Aufspanntisch angeordneten und durch Vertikalbewegungen des Palettenträgers betätigbaren Spannvorrichtung, die mindestens einen Keilschieber für die Klemmung eines Spannelementes der abgelegten Palette sowie mindestens ein vom Palettenträger betätigbares Stellglied zum Lösen der Klemmung gegen Federkraft aufweist.

Aus der DE-PS 39 23 574 ist eine Vorrichtung zum Palettenwechsel bekannt, bei der ein Palettenwechsler vor dem maschineneigenen Werkstücktisch angeordnet ist und einen motorisch heb- und senkbaren sowie um seine Hochachse verdrehbaren Palettenträger zum Austausch einer auf dem Werkstücktisch angeordneten Palette gegen eine in einer Bereitstellungsposition befindliche Palette enthält.

Die Fixierung der Palette auf dem Werkstücktisch erfolgt über mehrere an jeder Palette angeordnete Klemmbolzen, die von einer hydraulisch betätigten Spanneinheit im Werkstücktisch festgeklemmt werden. Ein Nachteil dieser Vorrichtung besteht darin, daß für die Betätigung der Palettenspannvorrichtung ein gesonderter Hydraulikantrieb benötigt wird. Die Ansteuerung des Palettenwechslerantriebes und des Hydraulikantriebes der Spannvorrichtung erfolgt separat und muß in geeigneter Weise aufeinander abgestimmt sein. Für die Betätigung und Anpassung der beiden gesonderten Antriebe ist daher ein entsprechend komplexes Steuersystem erforderlich.

Aus der GB-A-2 024 672 ist eine Vorrichtung zum Klemmen einer auf einem Werkstücktisch längs verschiebbaren Polette bekannt, die zwei durch einen Steuerschieber betätigbare Klemmelemente umfaßt. Zur Verschiebung der Klemmelemente in eine Klemmstellung enthält der Steuerschieber eine Keilfläche, die mit einer entsprechenden Gegenfläche an einer in Eingriff mit den Klemmelementen befindlichen Kulisse zusammenwirkt. Zum Lösen der Klemmung ist an dem Steuerschieber eine Nockenrolle befestigt, die mit einer Schrägfläche an einer Palettenübergabeeinrichtung zusammenwirkt.

Ferner ist aus der EP-A-0 521 316 eine gattungsgemäße Vorrichtung zum automatischen Palettenwechsel bekannt, die eine automatische und positionsgenaue Fixierung der Werkstückpalette auf dem Palettenträger ermöglicht. Bei dieser Vorrichtung hat die Klemmeinrichtung zwei über Druckfedern gegeneinander vorgespannte Klemmschieber, an deren einander zugewandten Stirnseiten Keile ausgebildet sind. Die an der Unterseite jeder Palette befestigten Spannbolzen weisen seitliche Keilnuten auf, in welche die Keile der beiden Klemmschieber gegensinnig verriegelnd eingreifen. Zumindest einer der Klemmschieber hat eine seitliche Aussparung, in die ein Stellelement eingreift. Im Palettenträger sind mehrere Wellen gelagert, die an ihrem einen Ende je ein Stellelement tragen und an ihrem anderen Ende über je ein Betätigungsglied von dem vertikal bewegten Palettenträger verdreht werden. Die Vertikalbewegung des Palettenwechslers wird über mechanische Betätigungs- und Stellelemente in eine Horizontalverschiebung der Klemmschieber zum Lösen bzw. Verriegeln der Palettenklemmung umgesetzt. Zur Betätigung der Palettenspannvorrichtung entfällt somit ein gesonderter Antrieb und die entsprechenden Steuerelemente. Nachteilig bei dieser bekannten Vorrichtung ist jedoch der relativ hohe konstruktive Aufwand durch das Vorsehen von jeweils zwei Wellen mit Betätigungs- und Stellelementen.

Aufgabe der Erfindung ist es, bei einer gattungsgemäßen Positioniervorrichtung für Paletten die Funktionszuverlässigkeit der Klemmung zu verbessern und deren Konstruktion zu vereinfachen.

Diese Aufgabe wird erfindungsgemäß durch die kennzeichnenden Merkmale des Anspruchs 1 gelost.

Durch die erfindungsgemäße Anordnung des Stellgliedes direkt am stirnseitigen Ende oder auch an einer Seite des Keilschiebers wird erreicht, daß bei einer Vertikalbewegung des Palettenträgers der Keilschieber unmittelbar gegen die wirkende Federkraft längsverschoben wird, ohne daß die beim gattungsgemäßen Stand der Technik erforderliche Umsetzung der Vertikalbewegung des Palettenträgers in Verdrehbewegungen von Wellen erfolgen muß. Dadurch ergibt sich ein wesentlich verringerter konstruktiver Aufwand.

Zur gleichzeitigen Klemmung mehrerer Spannelemente einer Palette ist der das Stellglied tragende Keilschieber über eine Schubstange und mindestens eine Feder mit einem zweiten Keilschieber verbunden, wobei die Schubstange in einem der beiden Keilschieber verschiebbar geführt und mit diesem Keilschieber über eine weitere Feder kraftschlüssig verbunden sein kann. Durch diese Konstruktion wird eine gleichzeitige Betätigung der beiden jeweils gesondert federbelasteten Keilschieber durch nur ein einziges Stellglied ermöglicht, was bei einfacher Konstruktion der Spannvorrichtung eine besonders sichere und positionsgenaue Fixierung der Palette auf dem Aufspanntisch gewährleistet.

Im folgenden wird ein Ausführungsbeispiel der Erfindung anhand der Zeichnung im einzelnen beschrieben. Es zeigen:
- Fig. 1: eine in einen Aufspanntisch eingebaute Positioniervorrichtung vor der Ablage einer Palette;
- Fig. 2: die Positioniervorrichtung nach Fig. 1 bei festgeklemmter Palette.

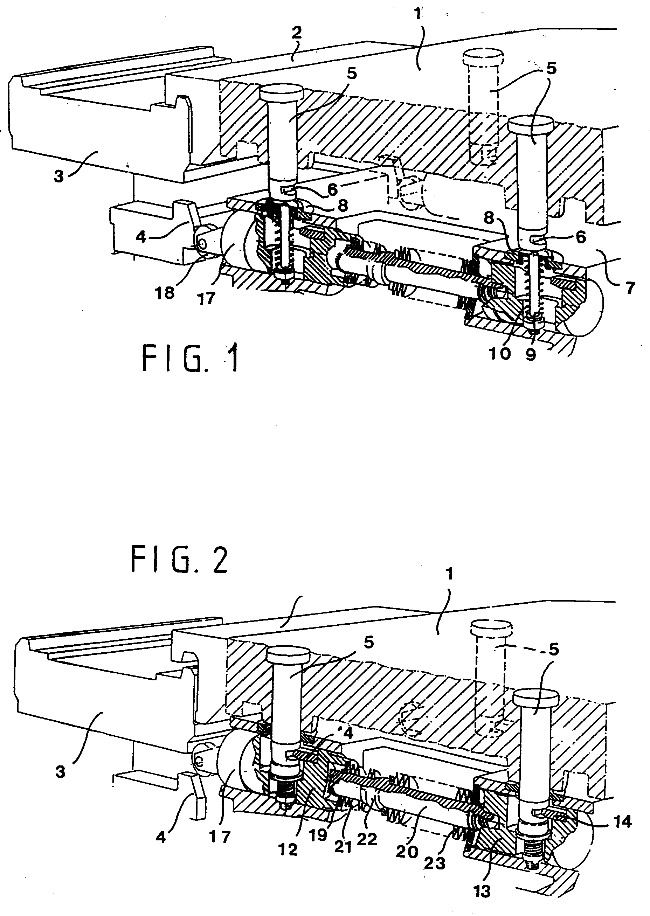

Gemäß Fig. 1 ist eine Palette 1 mittels eines an einer ihrer Seitenwände befestigten hakenförmigen Tragelements 2 an einem z.B. aus der DE-PS 39 23 574 bekannten Palettenträger 3 lösbar gehaltert, der um eine Vertikalachse verdrehbar ist und vertikale Absenk- bzw. Anhebebewegungen ausführen kann. Am Palettenträger ist ein Betätigungsnocken 4 befestigt, der seitlich vorsteht und eine Auflaufschräge aufweist. In der Palette 1 sind mehrere Klemmbolzen befestigt, die an ihrem vorstehenden unter Endabschnitt je eine seitliche Keilnut 6 aufweisen.

In einem z.B. als Werkstücktisch einer nicht dargestellten Werkzeugmaschine ausgebildeten Aufspanntisch 7 sind Aufnahmeöffnungen 8 für jeden der Klemmbolzen 6 vorgesehen. In jeder Aufnahmeöffnung 8 befindet sich ein Stift 9 und eine Feder 10, die an ihrem oberen Ende einen Deckel 11 trägt. In einer horizontalen Ausnehmung im Aufspanntisch 7 sind zwei Keilschieber 12, 13 längsverschiebbar angeordnet, die vertikale Querausnehmungen für die Aufnahme je eines Klemmbolzens sowie jeweils einen horizontalen Klemmkeil 14 aufweisen. Am Ende des in Fig. 1 linken Klemmschiebers ist ein Zwischenstück 17 angeordnet, an dem eine auskragende Laufrolle 18 als Stellglied gelagert ist.

Am rechten Ende des linken Klemmschiebers ist eine Platte 19 befestigt, in deren zentraler Öffnung ein Ende einer Stange 20 längsverschiebbar geführt ist. An dieser Scheibe 19 stützt sich eine erste Druckfeder 21 ab, deren anderes Ende an einem Ringbund 22 an der Stange 20 anliegt. Eine zweite Feder 23 ist zwischen diesem Ringbund 22 und einer Scheibe 24 eingespannt, die vom rechten Endteil der Stange 22 durchragt wird und im Aufspanntisch 7 fixiert ist. Die Stange 22 ist mit ihrem rechten Ende in den Keilschieber 13 eingeschraubt.

Die Funktionsweise der erfindungsgemäßen Positioniervorrichtung ergibt sich durch eine gemeinsame Betrachtung der Fig. 1 und 2. Wenn der Palettenträger 3 aus der angehobenen Position nach Fig. 1 in die Ablegeposition nach Fig. 2 abgesenkt wird, treten die Klemmbolzen 5 in die Aufnahmeöffnungen 8 im Aufspanntisch 7 ein, wobei die Deckel 11 durch das Palettengewicht gegen die Kraft der Feder 10 niedergedrückt werden und die Stifte 9 in eine entsprechende Längsbohrung der Klemmbolzen 5 eindringen. Die Auflaufschräge des Betätigungsnockens 4 ist so positioniert, daß bereits bei Beginn einer Absenkbewegung des Palettenträgers 3 die Laufrolle 18 an der Auflaufschräge derart abläuft, daß sich das Zwischenstück 17 zusammen mit den beiden Klemmschiebern 12 und 13 aus der Lösestellung nach Fig.1 in die Klemmstellung nach Fig. 2 bewegt, sobald die Palette 1 auf dem Aufspanntisch 7 aufliegt und sich die seitlichen Klemmnuten 6 der Spannbolzen in ihrer Spannposition befinden.

Bei der dargestellten Ausführung erfolgt ein gleichzeitiger Eingriff der beiden Keile 14 in die jeweiligen Keilnuten 6 der Spannbolzen 5 durch die funktionale Kopplung der beiden Keilschieber 12, 13 über die Stange 20 und die beiden Druckfedern 21 und 23. Beim Klemmvorgang wird der Klemmschieber 13 von der zwischen dem Ringbund 22 und der festgelegten Scheibe eingespannten Feder in seine Klemmstellung nach links bewegt, während der linke Klemmschieber 12 durch die Kraft der beiden Federn 21 und 23 in seine Einrückstellung gelangt.

Die Erfindung ist nicht auf das dargestellte Ausführungsbeispiel beschränkt. So kann beispielsweise die das Stellglied bildende Laufrolle 18 nicht an der Stirnseite eines Schiebers sondern seitlich angeordnet sein, wobei in diesem Fall dann der Nocken 4 eine entsprechend ausgerichtete Auflaufschräge besitzt. Darüber hinaus können auch mehr als zwei Klemmbolzen durch die in den Fig. 1 bzw. 2 dargestellte Spannvorrichtung festgeklemmt werden.

## Patentansprüche

1. Vorrichtung zur lagefixierten Positionierung einer Palette auf einem Aufspanntisch, bestehend aus
- einem vertikal bewegbaren Palettenträger (3) für den Transport und zum Abheben bzw. Auflegen einer mit unterseitigen Spannelementen (5) versehenen Palette (1) und
- mindestens einer im Aufspanntisch (7) angeordneten und durch Vertikalbewegungen des Palettenträgers (3) betätigbaren Spannvorrichtung, die mindestens einen Keilschieber (12, 13) für die Klemmung eines Spannelementes (5) der abgelegten Palette (1) sowie mindestens ein vom Palettenträger (3) betätigbares Stellglied (18) zum Lösen der Klemmung gegen Federkraft (21, 23) aufweist,
dadurch **gekennzeichnet,**
- daß das Stellglied (10) an einem der Keilschieber (12, 13) direkt befestigt ist, und
- daß zur gleichzeitigen Klemmung mehrerer Spannelemente (5) der das Stellglied tragende Keilschieber (12) über eine Schubstange (20) und mindestens eine Feder (21) mit mindestens einem zweiten Keilschieber (13) verbunden ist.

2. Vorrichtung nach Anspruch 1,
dadurch gekennzeichnet, daß
die Schubstange (20) in einem der Keilschieber (12) verschiebbar geführt und mit diesem Keilschieber (12) über die eine Feder (21) kraftschlüssig verbunden ist.

3. Vorrichtung nach Anspruch 1 oder 2,
dadurch gekennzeichnet, daß
auf der Schubstange (20) ein Ende einer zweiten Feder (23) befestigt ist, die sich mit ihrem anderen Ende an einem ortsfesten Anschlag abstützt.

## Claims

1. A device for the fixed positioning of a pallet on a clamping table, comprising
- a vertically movable pallet carrier (3) for transporting and lifting or placing on a pallet (1) provided with tensioning elements (5) on the underside, and
- at least one tensioning device which is arranged in the clamping table (7), may be actuated by vertical movements of the pallet carrier (3) and has at least one tapered slide valve (12, 13) for clamping a tensioning element (5) of the deposited pallet (1), and at least one adjusting element (18), which may be actuated by the pallet carrier (3), for releasing the clamping action in opposition to a spring force (21, 23),
characterized
- in that the adjusting element (10) is secured directly to one of the tapered slide valves (12, 13), and
- in that, to clamp a plurality of tensioning elements (5) at the same time, the tapered slide valve (12) carrying the adjusting element is connected to at least a second tapered slide valve (13) by way of a push rod (20) and at least one spring (21).

2. A device according to Claim 1,
characterized in that
the push rod (20) is guided to be displaceable in one of the tapered slide valves (12) and is connected with force fit to this tapered slide valve (12) by way of the one spring (21).

3. A device according to Claim 1 or 2,
characterized in that there is secured to the push rod (20) one end of a second spring (23) which is supported by its other end against a fixed stop.

## Revendications

1. Dispositif pour le positionnement stable d'une palette sur une table de serrage, comprenant
- un support de palette (3) à déplacement vertical pour le transport et l'enlèvement ou la pose d'une palette (1) munie d'éléments de serrage (5) situés dans la partie inférieure et
- au moins un dispositif de serrage monté dans la table de serrage (7) et actionné par des déplacements verticaux du support de palette (3) comportant au moins un coulisseau à coins (12, 13) pour le blocage d'un élément de serrage (5) de la palette (1) déposée et au moins un élément de réglage (18) pouvant être actionné par le support de palette (3) pour défaire le blocage contre l'action de ressorts (21, 23), caractérisé en ce que
- l'élément de réglage (18) est fixé directement sur un des coulisseaux à coins (12, 13) et en ce que
- pour bloquer plusieurs éléments de serrage (5) en même temps, le coulisseau à coins (12) supportant l'élément de réglage est relié par une barre de traction (20) et au moins un ressort (21) à au moins un deuxième coulisseau à coins (13).

2. Dispositif selon la revendication 1 caractérisé en ce que la barre de traction (20) est guidée de manière mobile dans un des coulisseaux à coins (12) et est relié à ce coulisseau à coins (12) par l'intermédiaire de la force d'un ressort (21).

3. Dispositif selon la revendication 1 ou 2 caractérisé en ce qu'une des extrémités d'un deuxième ressort (23) est fixée sur la barre de traction (20) et que l'autre extrémité s'appuie contre une butée fixe.
